# EUROPEAN PATENT SPECIFICATION

(11) **EP 2 008 762 B1**
(45) Date of publication and mention of the grant of the patent: **25.03.2009**
(21) Application number: 07425394.9
(22) Date of filing: 27.06.2007
(51) Int. Cl.: B23Q 1/58, B23Q 5/58

(54) **Vertically movable slide unit for an operating machine, with an integrated anti-fall device**
Vertikal bewegliche Verschiebeeinheit für ein Betriebsgerät mit integrierter Anti-Fall-Vorrichtung
Unité coulissante pouvant se déplacer verticalement pour machine de manoeuvre dotée d'un dispositif anti-chute intégré

(43) Date of publication of application: 31.12.2008
(73) Proprietor: COMAU SpA, 10095 Grugliasco (Torino) (IT)
(72) Inventor: Giusto, Michele, c/o Comau S.p.A., 10095 Grugliasco (Torino) (IT)
(74) Representative: Notaro, Giancarlo

(56) References cited:
- EP-A- 1 354 665
- DE-C1- 4 136 267
- DE-C1- 4 313 900
- US-A1- 2005 199 451

## Description

The present invention relates to a vertically movable slide unit for an operating machine, of the type indicated in the preamble of claim 1.

A unit of this type is known from DE 41 36 267 C1.

Vertical slide devices of the above type are used in a great variety of machines in the industry. A specific application of the present invention has been developed, for example by the Applicant, for an automatic assembly machine of the type which has formed the subject of the preceding European patent applications EP 06 425499 and EP 06 425500 of the Applicant (still secret at the filing date of this application). In machines of this type, the vertical slide is driven for example by an electric motor, through a screw and leadscrew transmission, or still by a fluid actuator. In one case or the other, a safety main brake, directly associated to the motor or actuator, is foreseen for preventing an undesired movement of the slide, for example when operators have to carry out maintenance works in the operating area of the machine, below the movable structure carried by the vertical slide. In addition to such main brake, also an auxiliary anti-fall blocking device is foreseen, suitable for preventing any accidental falls of the structure carried by the slide.

The object of the present invention is to carry out a device of this type which has an extremely simple, reliable and functional structure, which ensures a high safety degree against the accidental falls and which further has a reduced encumbrance and a simple maintenance.

In view of the obtainment of this aim, the object of the present invention is a device having all the features indicated in annexed claim 1.

In case of the preferred embodiment, the guide plane of the slide defined by the support structure has a width corresponding with the width of the slide and the aforesaid anti-fall device is interposed amongst opposite side portions of the fixed guide plane and the back face of the slide. In such embodiment, the rack is carried by the guide plane and the engagement element of the rack is carried by the slide.

Always in case of the aforesaid preferred embodiment, the aforesaid slide guide plane includes a main portion, carrying guide means engaged by the slide, and a vertical side portion, protruding with respect to the main portion of the guide plane, on which said rack is arranged. The back face of the slide includes a main portion, carrying engagement means of the aforesaid guide means and a side vertical portion, protruding with respect to the main portion of the back face of the slide, on which the aforesaid engagement means is foreseen.

According to another feature, the aforesaid opposite side portions of the back face of the slide and the guide plane carried by the support structure are substantially situated in a same plane parallel to the guide plane of the slide and substantially passing through an action axis of said drive means of the slide movement.

Thanks to the above features, the device according to the invention presents evident advantages from the structure simplicity, operation reliability, reduced encumbrance and maintenance easiness points of view.

Still in case of the preferred embodiment of the invention, the engagement element of the rack is an element slidably mounted between an advanced engagement position of the rack and a down retracted position. Springy means, aiming to push such element towards its advanced position and actuator means for maintaining the engagement element within its retracted position against the action of the springy means are foreseen. During the normal functioning of the machine, actuator means are energized for maintaining the engagement element in the retracted condition, so as to exclude the functioning possibility of the anti-fall device. A sensor device is associated with the slide for detecting when the engagement element is in its retracted position and for signaling such condition to electronic control means, which allow the normal functioning of the machine only when the retracted position of the engagement element of the rack is confirmed.

In case of breakdown or need to carry out maintenance works in the operating area of the machine, actuators means are automatically deactivated, whereby the aforesaid springy means push the above mentioned engagement element in its advanced condition in engagement within the space between two adjacent tooth of the rack. In such condition, the slide is thus prevented from moving downwards with respect to the rack, whereby the maintenance works can be carried out with the required safety.

As it results apparent, all the anti-fall device is integrated within the slide structure, and does not present parts protruding outside the encumbrance of the slide, which allows the obtainment of a machine structure with a reduced encumbrance.

Further features and advantages of the invention will result apparent from the following description with reference to the enclosed drawings, given by mere way of not limiting example, in which:
- figure 1 is diagrammatic perspective view of a part of an operating machine using a slide device according to the invention,
- figure 2 shows the slide device of figure 1 in a different operating condition,

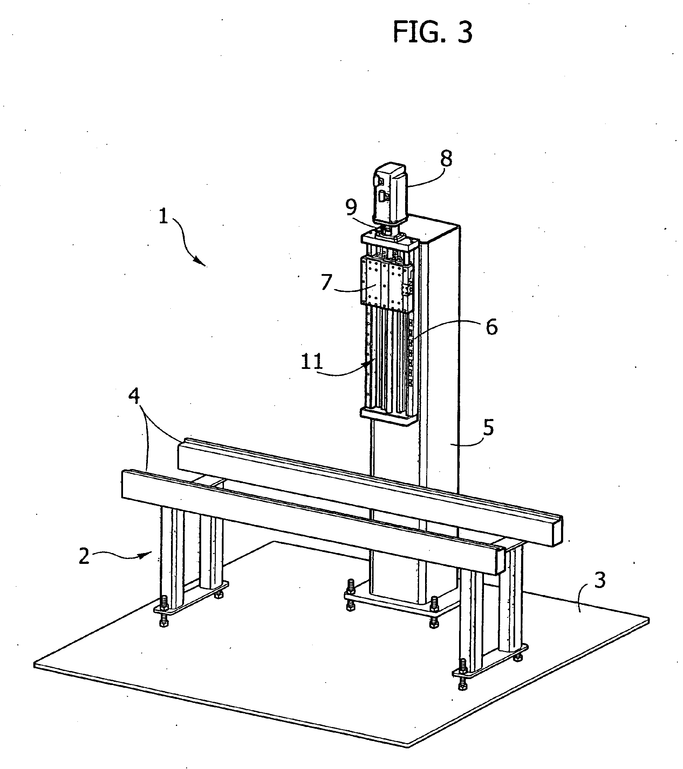

- figure 3 is a perspective view corresponding with the one of figure 1, in which protection bellows associated with the slide have been removed, for a greater clearness of the illustration of the structure on which the slide is guided,
- figure 4 is an enlarged scale perspective view of a particular of figure 3,
- figure 5 is a further enlarged perspective view of a particular of figure 4,

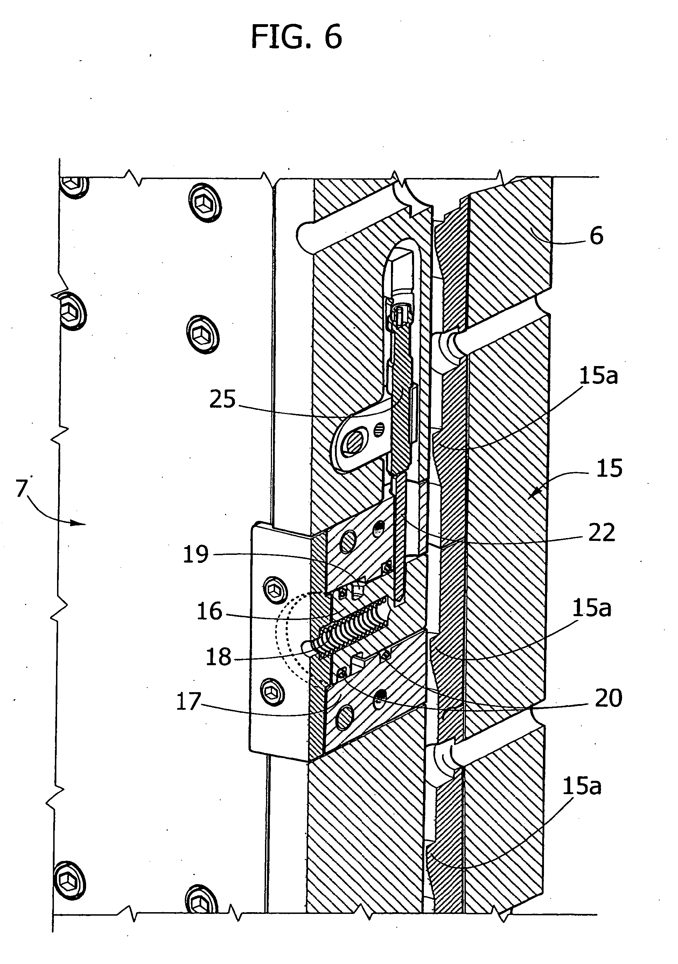

- figure 6 is an enlarged and partly sectioned scale view of the particular A of figure 5,
- figure 7 is a sectional orthogonal view, according to the section plane visible in figure 6, which shows the anti-fall device in a first operating condition,

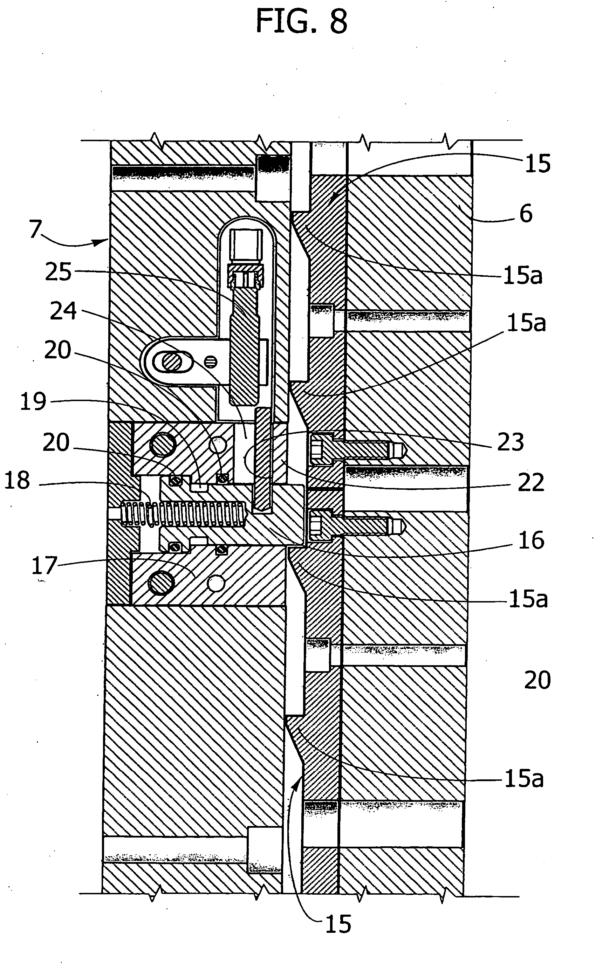

- figure 8 shows the section of figure 7 in a different operating condition,
- figure 9 is an additional partly perspective view of the slide with the relative anti-fall device,

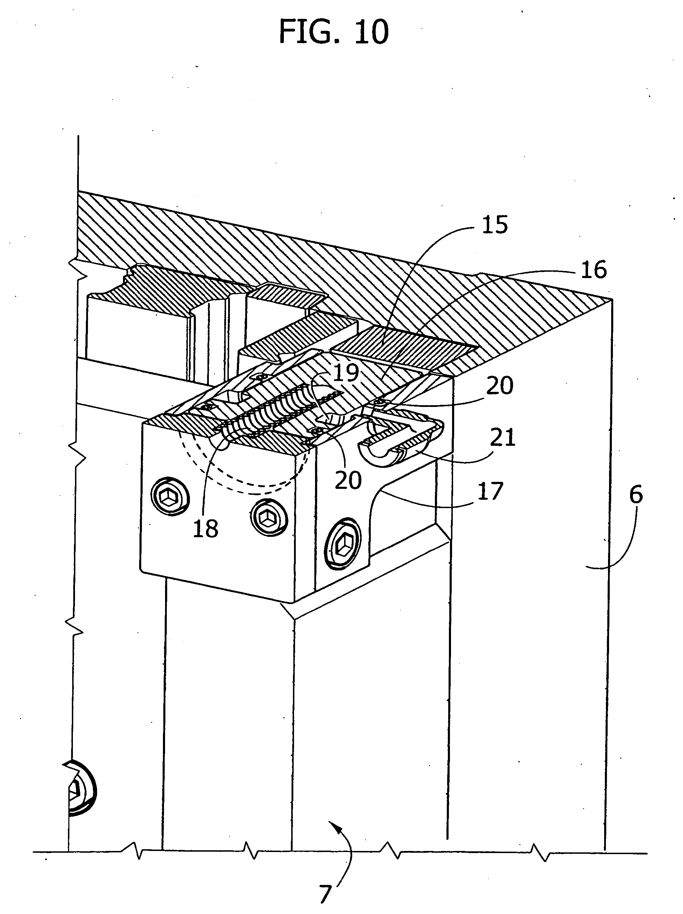

- figure 10 is a sectional perspective view, in an enlarged scale, of the particular A of figure 9, and
- figure 11 is a sectional orthogonal view in the section plane of figure 10.

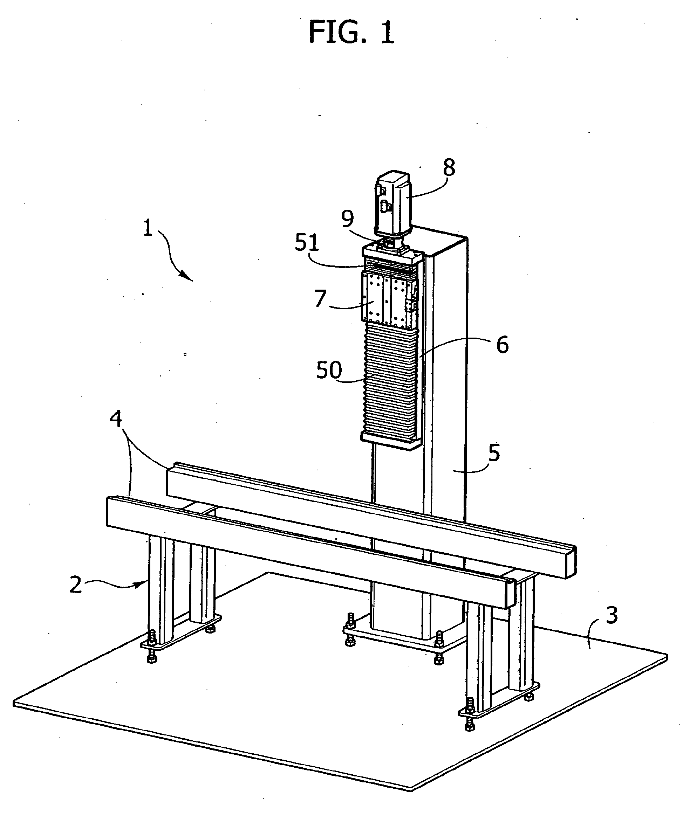

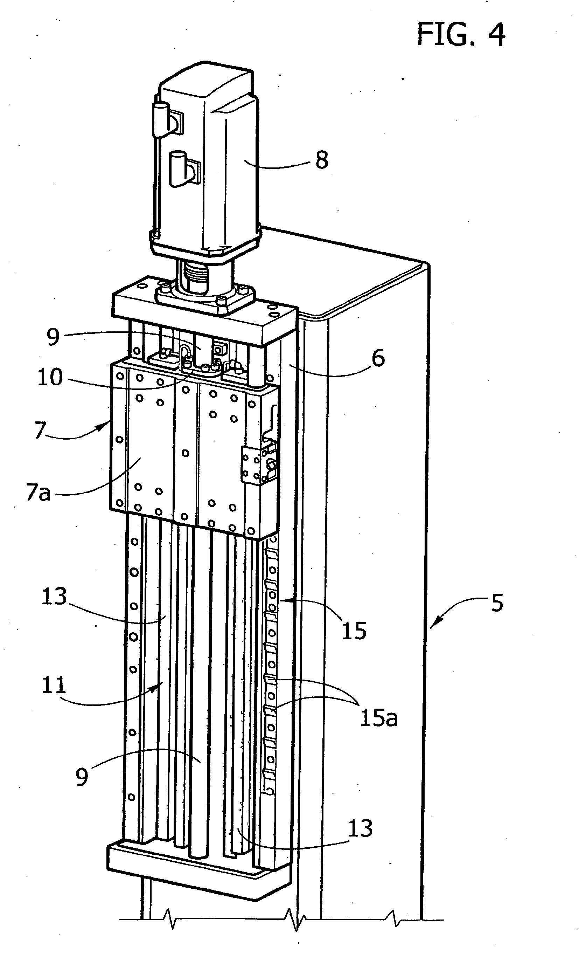

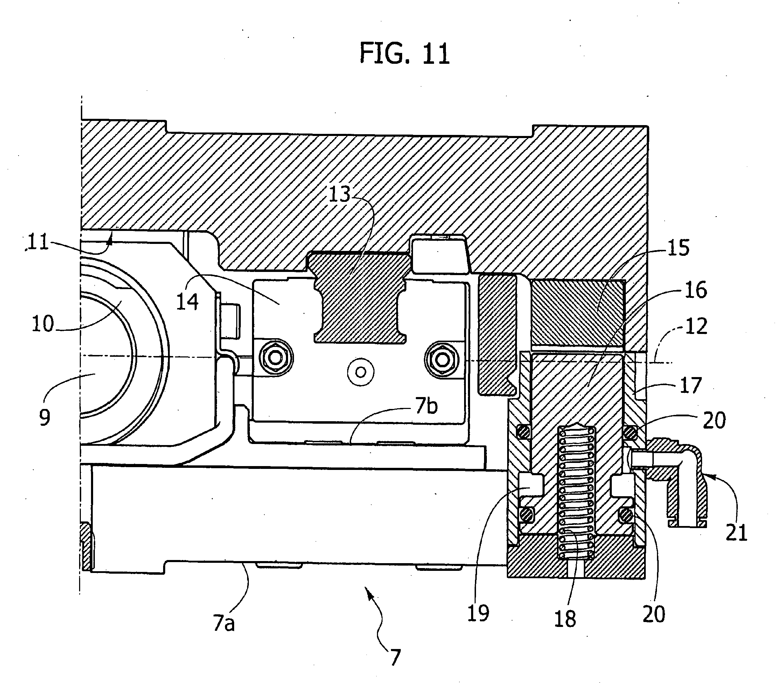

In figure 1, numeral 1 generally shows an operating machine of any type, for example an automated assembly machine, such as the one forming the subject of the preceding European patent application EP 06 425499 and 06 425500. In figure 1, many parts of the machine have been eliminated for clarness of illustration, while only some parts have been left, with reference to the application of the present invention. The machine includes a support structure 2 mounted on a floor 3 including, in the case of the example shown, horizontal profiles 4 intended for supporting a transport line for supplying the pieces on which the machine 1 have to operate until an operating zone of the machine. In correspondence of such zone, the machine includes a fixed vertical column 5 on which a supporting vertical structure 6 is mounted, on which a vertically sliding slide 7 is mounted. In the case of the example shown, the vertical movement of the slide 7 is driven by an electric motor 8 mounted on the top of the column 5, through a transmission including a screw 9 rotationally driven by the shaft of the motor 8 and a leadscrew 10 (see figure 4 and 11) connected with the structure of the slide 9.

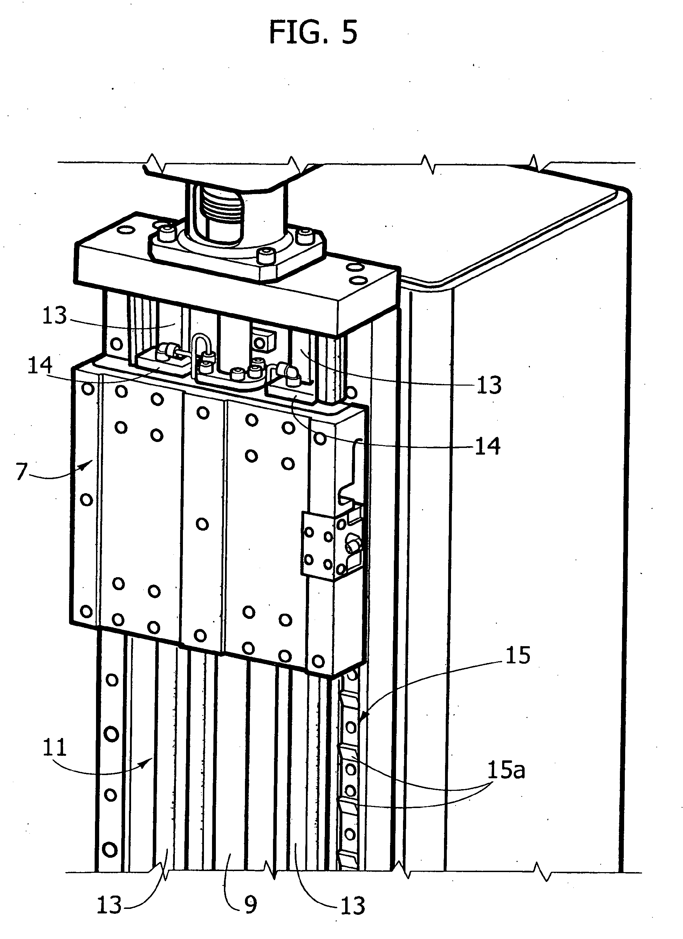

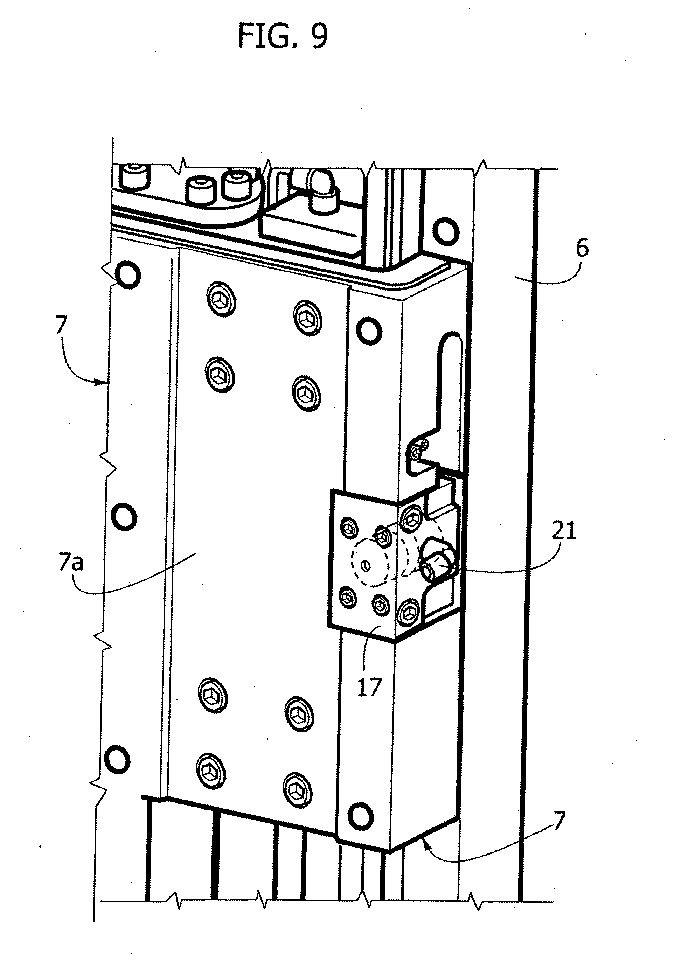

As it is clearly visible in figure 5, the slide 7 shows a general plate-like conformation, with a vertical front face 7a and a vertical back face 7b (see figures 9, 11). As it is visible in figure 4 and 11, the support structure 6 defines a guide vertical plane 11 of the slide 7, to which the back vertical face 7b of the slide 7 is faced. The slide 7 and the fixed structure 6 substantially show the same width.

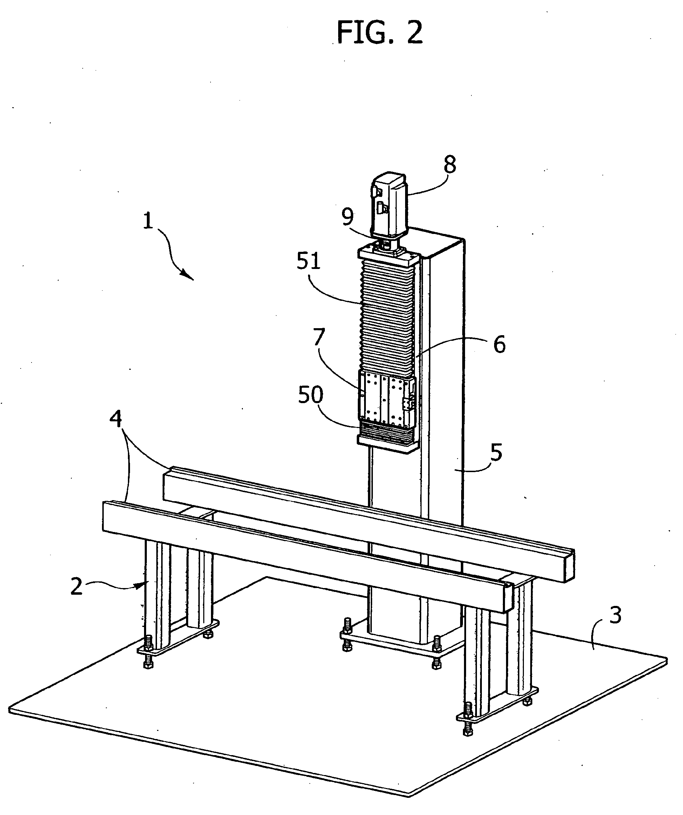

The plate-like body of the slide 7 shows two protruding side vertical portions with respect to the plane of the back face 7b, so as to define two back side surfaces (only one of which is visible in figure 11, which shows only half of the device) substantially contained in a same plane 12 spaced apart with respect to the plane of the back face 7b. Likewise, the support structure 6 shows its face faced towards the slide 7, defining the guide plane 11 of the slide, with a central portion and two vertical side portions, protruding with respect to the main portion and substantially contained in the plane 12. In this way, between the two central portions of the opposite surfaces of the support structure 6 and the slide 7 a space is defined, wherein (see figure 11) both the leadscrew 10, which is firmly connected with the slide 7 and is engaged by the screw 9, and two guide rails 13 fixed to the support structure 6, and two skids 14 firmly connected with the structure of the slide 7 and slidably engaged on the rails 13 are housed (see figures 4, 11). Figures 1, 2 also show two bellows coverings 50, 51, interposed one between the lower end of the structure 6 and the lower end of the slide 7, and the other between the upper end of the structure 6 and the upper end of the slide 7, so as to cover the parts of the guide plane 11 defined by the fixed structure 6 above and below the slide.

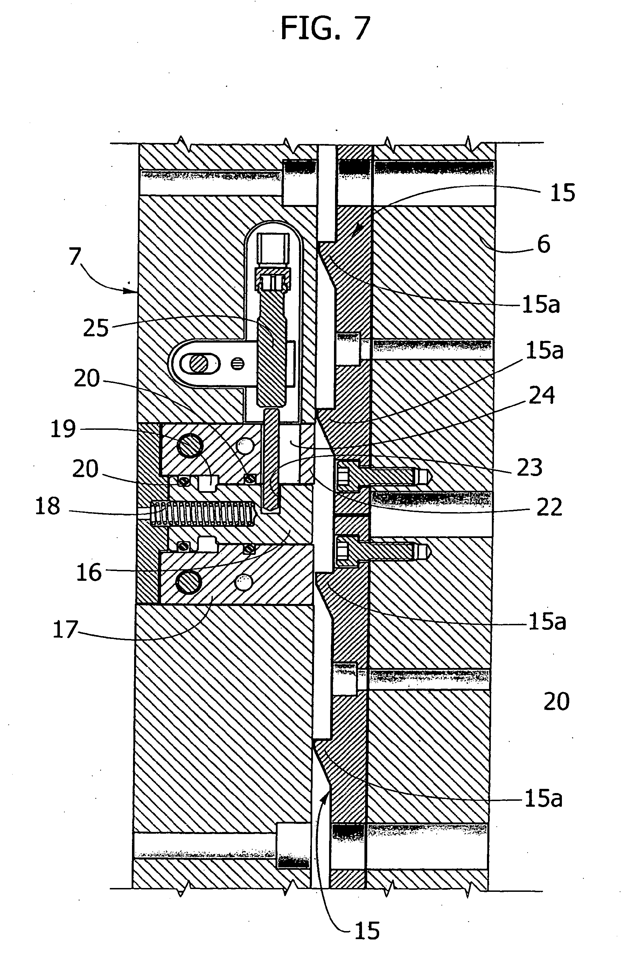

As it is visible in the drawings, along a side portion of the support structure 6 a vertical rack 15, having the profile visible in figure 7, is fixed. Such figure also shows the holes for the engagement of the fixing screws of the rack to the support structure 6. The rack 15 shows teeth 15a foreseen with a uniform pitch along the rack, each tooth 15a having a plane horizontal upper side and an inclined lower side. In a side portion of the body of the slide 7 which is opposite to the rack 15, an engagement element of the rack is arranged, which is shown by numeral 16. The element 16 shows a cylindrical body slidably mounted like a piston within a cylindrical cavity of a body 17 fixed to the slide 7. A coil spring 18 interposed between the sliding element 16 and the structure of the slide 7 tends to push the sliding element 16 in an advanced position in which it engages, with its front end, a space of the rack 15 faced to the same, so as to prevent a vertical movement of the slide relative to the support structure 6, unless for the short distance between two adjacent teeth of the rack 15. The body of the sliding element 16 defines an annular chamber 19 with the wall of the cylindrical cavity in which the element 16 is sliding, which is tightly isolated relative to the exterior through sealing rings 20.

The annular cavity 19 is supplied with pressurized air through a fitting 21 for maintaining the engagement element 16 in a retracted condition, not engaged by the rack 15 (see figure 7) against the action of the spring 18. In such a condition, the anti-fall device is deactivated. A pin 22 is forced in a cross seat 23 of the sliding element 16, so as to move with the sliding element 16, within an opening hole 24 obtained in the body 17. The pin 22 cooperates with a contact sensor 25 which sends an electric signal to an electronic control unit (not visible in the drawings) which shows if the sliding element 16 is in its retracted position or in its advanced position. Only in the first case, the electronic control unit allows the normal functioning of the machine.

The body of the slide 7 has a series of holes for the engagement of fixing screws of a structure intended for being carried by the slide and being vertically movable with the same.

The functioning of the machine above described is the following.

During the normal functioning of the machine, the sliding element 16 is in its retracted position, thanks to the activation of the compressed air feeding to the chamber 19 associated therewith. Such condition is detected by the sensor 25, which provides for sending a corresponding signal to the electronic control unit of the machine, so as to allow the normal functioning of the machines. In the case of any breakdown, the feeding of compressed air to the chamber 19 is automatically interrupted. Likewise, such feeding is voluntarily interrupted if one desires to carry out maintenance works in the operating zone of the machine. The deactivation of the compressed air feeding to the annular chamber 19 causes the displacement of the sliding element 16 in its engaged position on the rack 15, due to the spring 18. In such a condition, therefore, the device ensures that the slide 7 cannot displace downwards, with respect to the support structure, for a stroke higher than the pitch of the teeth of the rack 15. As it can be seen, such result is obtained without modifying the encumbrance of the body of the slide 7 since the anti-fall device is integrated within the slide and is obtained within the opposite side portions of the back face of the slide and the guide plane of the slide defined by the support structure.

## Claims

1. Vertically movable slide unit for an operating machine, including:
- a support structure (5, 6),
- a slide (7) slidably mounted along a vertical direction on the support structure (6),
- drive means (8) for the vertical movement of the slide (7), carried by said support structure (5, 6) and
- a safety device for preventing an accidental fall of the slide (7), operatively interposed between the slide (7) and the support structure (6),
**characterized in that:**
the support structure (5,6) is a fixed column mounted on a floor (3) and defining a front guide plane (11) provided with rails (13) on which said slide (7) is slidably mounted,
said slide (7) is in form of a plate with opposite front and back vertical faces (7a,7b), with said vertical back face (7b) facing towards said front guide plane (11) of the support structure (5,6) and slidably mounted on said rails (13) provided on said plane (11), the anti-fall device includes a vertical rack (15) and a sliding element (16) of the rack, respectively carried by said support structure (6) and said back face (7b) of the slide, or vice versa by said back face (7b) and said support structure (6), and,
**in that** said anti-fall device is integrated within the slide (7) in such a way that when the sliding element (16) is in a retracted position, it does not present parts protruding outside the encumbrance of the slide (7).

2. Unit according to claim **1, characterized in that** the guide plane (11) defined by said support structure (6) has a width corresponding with the width of said slide (7) and **in that** said anti-fall device is arranged along opposite side portions of said guide plane (11) and the back face (7b) of the slide (7).

3. Unit according to claim **2, characterized in that** the rack (15) is carried by said guide plane (11) and the sliding element (16) is carried by said slide (7).

4. Unit according to claim **3, characterized in that** said guide plane (11) of the slide (7) includes a central portion, carrying drive means (13) engaged by the slide (7) and a side vertical portion, protruding with respect to the main portion of the guide plane (11), on which the rack (15) is arranged.

5. Unit according to claim **4, characterized in that** said back face (7b) of the slide (7) includes a central portion, carrying engagement means (14) of the aforesaid drive means (13), and a side vertical portion, protruding with respect to the main portion of the back face (7b) of the slide (7), on which said sliding element (16) is foreseen.

6. Unit according to claim **5, characterized in that** said opposite side portions of the back face (7b) of the slide (7) and the guide plane (11) defined by the support structure (6) are substantially situated in a same plane (12) parallel to the guide plane (11) of the slide (7) and substantially passing through an axis of said drive means (9, 10) of the slide movement.

7. Unit according to any one of the previous claims, **characterized in that** the sliding element (16) is slidably mounted between an advanced engagement position of the rack (15) and a down retracted position.

8. Unit according to claim **7, characterized in that** to the sliding element (16) springy means (18) are associated, for pushing the sliding element (16) towards its advanced position.

9. Unit according to claim **8, characterized in that** actuator means for maintaining the sliding element (16) in its retracted position, against the action of the aforesaid springy means (18), are foreseen.

10. Unit according to claim **9, characterized in that** a sensor device (25), suitable for detecting the position of the engagement element and signaling it to electronic control means for allowing the machine operation only when the sliding element (16) is in its retracted position, is foreseen.

## Patentansprüche

1. Vertikal bewegliche Verschiebeeinheit für ein Betriebsgerät, umfassend:
eine Unterstützungsstruktur (5, 6)
einen Schieber (7), der entlang einer vertikalen Richtung auf der Unterstützungsstruktur (6) verschiebbar befestigt ist,
Antriebsmittel (8) für die vertikale Bewegung des Schiebers (7), welcher durch die Unterstützungsstruktur (5, 6) getragen wird, und
eine Sicherheitsvorrichtung zur Vermeidung eines unbeabsichtigten Fallens des Schiebers (7), welcher sich wirksam zwischen dem Schieber (7) und der Unterstützungsstruktur (6) befindet,
**dadurch gekennzeichnet, dass:**
die Unterstützungsstruktur (5, 6) eine starre Säule ist, welche auf einem Untergrund (3) befestigt ist, und eine vordere Führungsebene (11) definiert, und mit Schienen (13) ausgestattet ist, auf welchen der Schieber (7) verschiebbar befestigt ist,
der Schieber (7) liegt in der Form einer Platte mit gegenüberliegenden vorderen und hinteren vertikalen Seiten (7a, 7b) vor, wobei die vertikale hintere Seite (7b) in Richtung der vorderen Führungsebene (11) der Unterstützungsstruktur (5, 6) zeigt, und verschiebbar auf den Schienen (13) befestigt ist, welche auf der Ebene (11) vorgesehen sind und die Anti-Fall-Vorrichtung einen vertikalen Steg (15) und ein Verschiebungselement (16) auf dem Steg einschließt, welche jeweils durch die Unterstützungsstruktur (6) und die hintere Seite (7b) des Schiebers getragen werden, oder umgekehrt durch die hintere Seite (7b) und die Unterstützungsstruktur (6), und
dadurch, dass die Anti-Fall-Vorrichtung innerhalb des Schiebers auf solch eine Art integriert ist, dass sie keine Teile aufweist, die von der äußeren Umhüllung des Schiebers (7) hervorstehen, wenn das Verschiebeelement (16) in einer vertikalen Position ist.

2. Einheit nach Anspruch 1, **dadurch gekennzeichnet, dass** die Führungsfläche (11), die durch die Unterstützungsstruktur (6) definiert wird, eine Breite entsprechend der Breite des Schiebers (7) aufweist, und dadurch, dass die Anti-Fall-Vorrichtung entlang gegenüberliegender Seitenabschnitte der Führungsfläche (11) und der hinteren Seite (7b) des Schiebers (7) angeordnet ist.

3. Einheit nach Anspruch 2, **dadurch gekennzeichnet, dass** der Steg (15) durch die Führungsfläche (11) getragen wird, und das Verschiebungselement (16) durch den Schieber (7) getragen wird.

4. Einheit nach Anspruch 3, **dadurch gekennzeichnet, dass** die Führungsfläche (11) des Schiebers (7) einen Zentralabschnitt einschließt, der Antriebsmittel (13) trägt, in die der Schieber (7) und ein vertikaler Seitenabschnitt eingreift, und in Bezug auf den Hauptabschnitt der Führungsfläche (11), auf welcher der Steg (15) angeordnet ist, hervorstehen.

5. Einheit nach Anspruch 4, **dadurch gekennzeichnet, dass** die hintere Seite (7b) des Schiebers (7) einen Zentralabschnitt einschließt, welcher Eingriffsmittel (14) der vorher erwähnten Antriebsmittel (13) trägt, und einen vertikalen Seitenabschnitt, welcher in Bezug auf den Hauptabschnitt der hinteren Seite (7b) des Schiebers (7) hervorsteht, auf welchem das Verschiebungselement (16) vorgesehen ist.

6. Einheit nach Anspruch 5, **dadurch gekennzeichnet, dass** die gegenüberliegenden Seitenabschnitte der hinteren Seite (7b) des Schiebers (7) und die Führungsfläche (11), die durch die Unterstützungsstruktur (6) definiert ist, sich im Wesentlichen in derselben Ebene (12) parallel zu der Führungsebene (11) des Schiebers (7) befinden, und im Wesentlichen durch eine Achse der Antriebsmittel (9, 10) der Verschiebungsbewegung hindurchgehen.

7. Einheit nach irgendeinem der vorherigen Ansprüche, **dadurch gekennzeichnet, dass** das Verschiebungselement (16) verschiebbar zwischen einer vorgezogenen Eingriffsposition des Stegs (15) und einer herabgezogenen Position befestigt ist.

8. Einheit nach Anspruch 7, **dadurch gekennzeichnet, dass** dem Verschiebungselement (16) Federmittel (18) zugeordnet sind, um das Verschiebungselement (16) in Richtung seiner vorgezogenen Position zu drücken.

9. Einheit nach Anspruch 8, **dadurch gekennzeichnet, dass** Betätigungsmittel zum Erhalt des Verschiebungsmittels (16) in seiner zurückgezogenen Position gegen die Wirkung der vorher erwähnten Federmittel (18) vorgesehen sind.

10. Einheit nach Anspruch 9, **dadurch gekennzeichnet, dass** eine Sensorvorrichtung (25) geeignet ist, die vorgesehen ist zum Erkennen der Position des Eingriffselements und zum Signalisieren dieser an elektronische Steuermittel zum Erlauben des Maschinenbetriebs, nur wenn das Verschiebungselement (16) in seiner zurückgezogenen Position ist.

## Revendications

1. Bloc coulissant mobile verticalement pour une machine opérante, comprenant :
- une structure support (5, 6),
- un curseur (7) monté à coulissement en suivant une direction verticale sur la structure support (6),
- des moyens d'entraînement (8) pour le déplacement vertical du curseur (7), portés par ladite structure support (5, 6), et
- un dispositif de sécurité pour empêcher une chute accidentelle du curseur (7), interposé de manière opérante entre le curseur (7) et la structure support (6),
**caractérisé en ce que :**
la structure support (5, 6) est une colonne fixe montée sur un sol (3) et définissant un plan de guidage frontal (11) pourvu de rails (13) sur lesquels ledit curseur (7) est monté à coulissement,
ledit curseur (7) est en forme d'une plaque avec des faces verticales avant et arrière (7a, 7b) opposées, avec ladite face verticale arrière (7b) étant tournée en direction dudit plan de guidage frontal (11) sur la structure support (5, 6) et montée à coulissement sur lesdits rails (13) prévus sur ledit plan (11),
le dispositif antichute comprend un râtelier vertical (15) et un élément coulissant (16) du râtelier, portés respectivement par ladite structure support (6) et ladite face arrière (7b) du curseur, ou vice versa par ladite face arrière (7b) et ladite structure support (6), et
**en ce que** ledit dispositif antichute est intégré au sein du curseur (7) d'une manière telle que, lorsque l'élément coulissant (16) est dans une position rétractée, il ne présente pas de partie faisant saillie à l'extérieur du volume enveloppe du curseur (7).

2. Bloc selon la revendication 1, **caractérisé en ce que** le plan de guidage (11) défini par ladite structure support (6) présente une largeur correspondant à la largeur dudit curseur (7) et **en ce que** ledit dispositif antichute est disposé le long de parties latérales opposées dudit plan de guidage (11) et de la face arrière (7b) du curseur (7).

3. Bloc selon la revendication 2, **caractérisé en ce que** le râtelier (15) est porté par ledit plan de guidage (11) et l'élément coulissant (16) est porté par ledit curseur (7).

4. Bloc selon la revendication 3, **caractérisé en ce que** ledit plan de guidage (11) du curseur (7) comprend une partie centrale, portant des moyens d'entraînement (13) en prise avec le curseur (7) et une partie verticale latérale, faisant saillie par rapport à la partie principale du plan de guidage (11), où le râtelier (15) est disposé.

5. Bloc selon la revendication 4, **caractérisé en ce que** ladite face arrière (7b) du curseur (7) comprend une partie centrale, portant des moyens (14) de venue en prise des moyens d'entraînement précités (13), et une partie verticale latérale, faisant saillie par rapport à la partie principale de la face arrière (7b) du curseur (7), où est prévu ledit élément coulissant (16).

6. Bloc selon la revendication 5, **caractérisé en ce que** lesdites parties latérales opposées de la face arrière (7b) du curseur (7) et le plan de guidage (11) défini par la structure support (6) sont substantiellement situés dans un même plan (12) parallèle au plan de guidage (11) du curseur (7) et substantiellement passant au travers d'un axe desdits moyens d'entraînement (9, 10) du déplacement du curseur.

7. Bloc selon l'une des revendications principales, **caractérisé en ce que** l'élément coulissant (16) est monté à coulissement entre une position de venue en prise avancée du râtelier (15) et une position rétractée basse.

8. Bloc selon la revendication 7, **caractérisé en ce qu'**à l'élément coulissant (16) sont associés des moyens à ressort (18), pour pousser l'élément coulissant (16) en direction de sa position avancée.

9. Bloc selon la revendication 8, **caractérisé en ce qu'**il est prévu des moyens actionneurs pour maintenir l'élément coulissant (16) dans sa position rétractée, à l'encontre de l'action des moyens à ressort précités (18).

10. Bloc selon la revendication 9, **caractérisé en ce qu'**il est prévu un composant capteur (25), convenant pour détecter la position de l'élément de venue en prise et le signalant à des moyens de contrôle électroniques pour autoriser le fonctionnement de la machine seulement lorsque l'élément coulissant (16) est dans sa position rétractée.
